Europäisches Patentamt

(19) European Patent Office

Office européen des brevets

(11) Publication number: **0 000 240**
**B1**

(12) **EUROPEAN PATENT SPECIFICATION**

(45) Date of publication of patent specification: **12.01.83**

(51) Int. Cl.³: **C 08 K 5/52, C 07 F 9/00**

(21) Application number: **78300009.4**

(22) Date of filing: **01.06.78**

(54) Phosphate ester compositions and process for preparing them.

(30) Priority: **17.06.77 GB 2541677**

(43) Date of publication of application:
**10.01.79 Bulletin 79/1**

(45) Publication of the grant of the patent:
**12.01.83 Bulletin 83/2**

(84) Designated Contracting States:
**BE DE FR GB SE**

(56) References cited:
**FR - A - 1 262 302**
**FR - A - 1 502 426**
**FR - A - 1 567 435**
**FR - A - 2 211 491**
**GB - A - 837 680**
**US - A - 2 596 141**

(73) Proprietor: **Monsanto Europe S.A.**
**Avenue de Tervuren 270-272**
**B-1150 Brussels (BE)**

(72) Inventor: **Feyt, Luc Edouard Adrien Marcel**
**9 Wern Road**
**Llangollen, Clwyd (GB)**

(74) Representative: **Lunt, John Cooper**
**Monsanto Europe S.A. Patent Department Avenue**
**de Tervuren 270-272 Letter Box No 1**
**B-1150 Brussels (BE)**

Courier Press, Leamington Spa, England

Phosphate ester compositions and process for preparing them

This invention relates to phosphate ester compositions that are useful as flame retardant plasticizers for vinyl chloride polymers.

Alkyl diaryl phosphates, for example 2-ethylhexyl diphenyl phosphate, are used as plasticizers for vinyl chloride polymers which are to be used under conditions where fire resistant properties in the polymer are required. Commercial alkyl diaryl phosphates normally contain small amounts, for example not more than 5% by weight of the total phosphate, of dialkyl aryl phosphates and triaryl phosphates. It has also been proposed to use halogen-containing phosphate esters for this purpose, but the halogen-containing esters are generally more expensive than hydrocarbyl esters, and their use is considered by some to be undesirable because of possible adverse environmental effects.

Triaryl phosphates, for example triphenyl phosphate, impart improved flame retardant properties to vinyl chloride polymers compared with the alkyl diaryl phosphates but the latter are the more effective plasticizers as judged by the physical properties of the vinyl chloride polymers containing them, especially by flexibility at low temperatures. Moreover, triphenyl phosphate is a crystalline solid at ordinary temperatures, and its incorporation into vinyl chloride polymers therefore requires a different and generally more complicated procedure than that used for the liquid alkyl diaryl phosphates.

We have found that certain blends of alkyl diphenyl phosphates and triphenyl phosphate can be prepared containing sufficient triphenyl phosphate to impart improved flame retardant properties to vinyl chloride polymers plasticized with the blends, while not significantly detracting from the physical and processing properties of the thus-plasticized polymers relative to the same vinyl chloride polymers plasticized with alkyl diaryl phosphates alone.

A simple way of making such blends is to dissolve the triphenyl phosphate in the alkyl diphenyl phosphate at a temperature at which the triphenyl phosphate dissolves readily, but we have found that triphenyl phosphate crystallizes from such blends on storage at temperatures of 0°C or below. Blends prepared in this way are therefore not suitable as commercial products.

The present invention provides a process for the production of blends of alkyl diphenyl phosphates and triphenyl phosphate having good low temperature storage stability.

The process of the invention is one for the production of a liquid phosphate ester composition which is a blend of (i) a first phosphate ester component formed by the reaction of a dihalidate reactant comprising at least one $C_{6-12}$ alkyl phosphorodihalidate with an alkali metal phenate, the said first phosphate ester component consisting of at least one $C_{6-12}$ alkyl diphenyl phosphate or a mixture of at least one $C_{6-12}$ alkyl diphenyl phosphate and at least one di($C_{6-12}$ alkyl) phenyl phosphate in which mixture the amount of the di($C_{6-12}$ alkyl) phenyl phosphate or phosphates is not more than 10 molar percent of the mixture, and (ii) triphenyl phosphate formed by the reaction of phosphorus oxyhalide with an alkali metal phenate, characterised in that phosphorus oxyhalide is reacted with a stoichiometric excess (relative to the phosphorus oxyhalide) of alkali metal phenate to form a mixture containing triphenyl phosphate and alkali metal phenate, and the alkali metal phenate in that mixture is reacted with the dihalidate reactant, and the proportions of the reactants employed are calculated to give a liquid phosphate ester composition in which the ratio by weight of the first phosphate ester component to the triphenyl phosphate is from 1.8:1 to 5.5:1.

Preferably the proportions of the reactants employed are calculated to give compositions in which the ratio by weight of the first phosphate ester component to the triphenyl phosphate is in range 1.85:1 to 5:1. The actual proportion in any particular instance will depend on a balance between increasing the amount of triphenyl phosphate to improve the flame-retardant properties of the compositions and achieving low temperature stability, the latter being improved as the proportion of triphenyl phosphate decreases. The compositions may, for example, have weight ratios of the first phosphate ester component to triphenyl phosphate within the range 2:1 to 2.5:1, or within the range 3:1 to 5:1.

Storage stabilities of compositions obtainable by the process of the invention are such that no crystallisation of triphenyl phosphate occurs during storage for 10 days at −5°C. However, it is possible to obtain compositions resistant to crystallisation under more severe conditions than this, for example during storage for 10 days or longer at temperatures below −5°C, for example 10 days at −10°C or −13°C or 20 days at −20°C.

The dihalidate reactant for use in the process of the invention can be prepared by the reaction of a $C_{6-12}$ alkanol or a mixture of $C_{6-12}$ alkanols with phosphorus oxyhalide, using 1 mole of alkanol per mole of phosphorus oxyhalide, with removal of the hydrogen halide generated by this reaction. Under normal process conditions, a small amount of di($C_{6-12}$ alkyl) phosphorohalidate, usually not exceeding one-tenth on a molar basis of the amount of the dihalidate reactant, is formed, as well as the $C_{6-12}$ alkyl phosphorodihalidate which is the major product. In practice it is unnecessary to remove the di($C_{6-12}$ alkyl) phosphorohalidate, so that the final liquid phosphate ester composition will normally contain an amount of di($C_{6-12}$ alkyl) phenyl phosphate corresponding to the amount of di($C_{6-12}$ alkyl) phosphorohalidate in the dihalidate reactant.

The steps of the process as defined above appear to be critical for the production of a product having the required degree of low temperature stability. For example, the concurrent formation of the alkyl diphenyl phosphate and the triphenyl phosphate by the reaction of a mixture of phosphorus oxyhalide and alkyl phosphorodihalidate with an alkali metal phenate in the appropriate proportions gives a product which is significantly less stable.

In a preferred way of operating the process, an amount of phosphorus oxyhalide corresponding to the required amount of triphenyl phosphate is added with agitation and cooling to an aqueous solution of alkali metal phenate containing sufficient alkali metal phenate to react with the whole of the phosphorus oxyhalide and with the dihalidate reactant to be added subsequently. The reaction of the phosphorus oxyhalide with the alkali metal phenate is highly exothermic, and the temperature is preferably controlled below 50°C, preferably in the range 15—30°C.

When the addition of the phosphorus oxyhalide is complete, addition of the dihalidate reactant to the reaction mixture is begun, again with agitation and cooling of the reaction mixture to keep the temperature below a preferred 50°C, for example within the range 15—30°C.

It is preferred to employ a small excess, for example from 2 to 10% more than the stoichiometric amount, of the alkali metal phenate overall. It is also preferred to use an alkali metal phenate solution containing free alkali metal hydroxide, for example up to 20% on a molar basis of the amount of alkali metal phenate.

When the addition of the dihalidate reactant is complete, stirring may be continued for a further period to ensure completion of the reaction. The reaction mixture is then preferably cooled to 5—15°C, preferably after the addition, if necessary, of sufficient water to retain in solution the alkali metal halide formed during the process, and the agitation discontinued. The reaction mixture thereafter separates into an aqueous layer containing alkali metal halide, and an organic layer comprising the phosphate ester composition. The organic layer is separated from the aqueous layer, and can be purified by conventional techniques, including for example washing with water and vacuum treatment.

The phosphorus oxyhalide usually employed in practice is phosphorus oxychloride, but phosphorus oxybromide, for example, could be used; and the usual alkali metal phenate is sodium phenate, but potassium phenate could be used.

In the compositions of the invention, the $C_{6-12}$ alkyl group can be a straight or branched-chain group, for example a n-hexyl, n-octyl, 2-ethylhexyl, n-decyl or n-dodecyl group, the corresponding alcohols used to prepare the dihalidate reactant being n-hexanol, n-octanol, 2-ethylhexanol, n-decanol and n-docecanol. A mixture of alcohols can be used, resulting in the first phosphate ester component containing more than one $C_{6-12}$ alkyl diphenyl phosphate.

A phosphate ester composition of the invention may contain only the first phosphate ester component and the triphenyl phosphate, but minor amounts of other ingredients such as diluents, compatible plasticizers or flame retardants may be added if desired.

The preferred compositions are those that contain no significant amounts of other ingredients, and in such compositions, the weight ratio ranges referred to above include compositions containing from 65% to 75% by weight of the first phosphate ester component, the balance (i.e. from 35% to 25% by weight of the composition) being triphenyl phosphate, and compositions containing from 75 to 85%, for example 80%, by weight of the first phosphate ester component, the balance being triphenyl phosphate. Particularly useful compositions contain 68—72% by weight 2-ethylhexyl diphenyl phosphate, 4—8% by weight di(2-ethylhexyl) phenyl phosphate, the balance being triphenyl phosphate.

The phosphate ester compositions of the present invention can be used as flame retardant plasticizers for vinyl chloride polymers in the same manner and in substantially the same amounts as the alkyl diphenyl phosphates used hitherto. The term "vinyl chloride polymer" includes polyvinyl chloride homopolymer and polymers obtained by the copolymerization of vinyl chloride with a minor amount of one of more monomers copolymerizable with vinyl chloride, for example olefins such as ethylene and propylene, vinyl ethers and alkyl acrylates and methacrylates.

The invention is illustrated by the following Examples.

Example 1
a) Preparation of alkyl phosphorodichloridate.

2-Ethylhexanol (137 grams) were added gradually to a stirred and cooled reactor containing 162 grams of phosphorus oxychloride while keeping the temperature of the reaction mixture at 13—17°C. To remove hydrogen chloride formed during the reaction, the pressure in the reactor was reduced to 70 mbar and the temperature was raised to 25°C. These conditions were maintained for 60 minutes and the 2-ethylhexyl phosphorodichloridate was then cooled to 15°C and the vacuum released.

b) Preparation of sodium phenate solution.

A 22% by weight solution of sodium hydroxide was prepared by diluting 368 grams of 46% by weight sodium hydroxide solution with 402 grams of water. To this solution, 347 grams of phenol were added gradually, keeping the temperature of the solution at 15—20°C.

c) Preparation of phosphate ester composition.

Phosphorus oxychloride (78.3 grams) was added gradually to the sodium phenate solution in a stirred and cooled reactor, the rate of addition being adjusted to maintain the temperature of the reactants at 20—25°C. The 2-ethylhexyl phosphorodichloridate was then added, again keeping the temperature at 20—25°C, and stirring (without cooling) was continued for 45 minutes after the addition of the phosphorodichloridate was complete. Water (300 grams) was then added and stirring was continued for a further 15 minutes and during subsequent cooling to 15°C. Stirring was then stopped, and the mixture was allowed to settle for 60 minutes, forming two layers, an upper aqueous layer and a lower organic layer.

The two layers were separated, and the organic layer was washed twice at 90°C with an equal volume of 2% by weight sodium hydroxide solution containing a small amount of a sequestering agent, and a further four times with an equal volume of water at a temperature of 70—80°C. After the final wash the phosphate ester product was steam stripped under vacuum to remove any residual low-boiling material, and then filtered.

The phosphate ester composition prepared as described above contained about 66% by weight of 2-ethylhexyl diphenyl phosphate, about 4% by weight of di(2-ethylhexyl) phenyl phosphate and 30% by weight of triphenyl phosphate. The composition showed no signs of crystallisation during 6 weeks storage at −13°C or at −20°C. In comparison, a composition containing the same proportions of phosphate ester ingredients but prepared by dissolving triphenyl phosphate in the other component showed turbidity after one week and an extensive deposit after two weeks at −13°C.

Examples 2—4

Other compositions within the scope of the invention were prepared by the same procedure as that described in Example 1, but with different amounts of reactants in stages b) and c). The amounts of reactants, together with the proportions of 2-ethylhexyl diphenyl phosphate (EDP), di(2-ethylhexyl) phenyl phosphate (DPP) and triphenyl phosphate (TPP) in the products, are shown in the table below.

| Example No. | 46% NaOH Solution (grams) | Phenol (grams) | Stage c) POCl₃ (grams) | Product Percent by Weight | | |
|---|---|---|---|---|---|---|
| | | | | EDP | DPP | TPP |
| 2 | 355 | 316 | 60 | 71—72 | 3—4 | 25 |
| 3 | 306 | 288.6 | 45 | 76—77 | 3—4 | 20 |
| 4 | 288 | 271.7 | 36 | About 80 | 3—4 | 16.7 |

## Claims

1. A process for the production of a liquid phosphate ester composition which is a blend of (i) a first phosphate ester component formed by the reaction of a dihalidate reactant comprising at least one $C_{6-12}$ alkyl phosphorodihalidate with an alkali metal phenate, the said first phosphate ester component consisting of at least one $C_{6-12}$ alkyl diphenyl phosphate or a mixture of at least one $C_{6-12}$ alkyl diphenyl phosphate and at least one di($C_{6-12}$ alkyl) phenyl phosphate in which mixture the amount of the di($C_{6-12}$ alkyl) phenyl phosphate or phosphates is not more than 10 molar percent of the mixture, and (ii) triphenyl phosphate formed by the reaction of phosphorus oxyhalide with an alkali metal phenate, characterised in that phosphorus oxyhalide is reacted with a stoichiometric excess (relative to the phosphorus oxyhalide) of alkali metal phenate to form a mixture containing triphenyl phosphate and alkali metal phenate, and the alkali metal phenate in that mixture is reacted with the dihalidate reactant, and the proportions of the reactants employed are calculated to give a liquid phosphate ester composition in which the ratio by weight of the first phosphate ester component to the triphenyl phosphate is from 1.8:1 to 5.5:1.

2. A process according to Claim 1, in which an amount of phosphorus oxyhalide corresponding to the required amount of triphenyl phosphate is added with agitation and cooling to an aqueous solution of alkali metal phenate containing sufficient alkali metal phenate to react with the whole of the phosphorus oxyhalide and with the dihalidate reactant to be added subsequently, and when the addition of the phosphorus oxyhalide is complete, the dihalidate reactant is added to the aqueous reaction mixture with agitation and cooling.

3. A process according to Claim 2, in which the original amount of alkali metal phenate is from 2 to 10% more than the stoichiometric amount relative to the phosphorus oxyhalide and dihalidate reactant together.

4. A process according to either of Claims 2 and 3, in which the reaction temperature during the reaction of the phosphorus oxyhalide with the alkali metal phenate and during the reaction of the dihalidate reactant with the alkali metal phenate is maintained in the range 15—30°C.

5. A process according to any of Claims 1 to 4, in which the proportions of the reactants employed are calculated to give a composition in which the ratio by weight of the first phosphate ester component to the triphenyl phosphate is within the range 2:1 to 2.5:1.

6. A process according to any of Claims 1 to 4, in which the proportions of the reactants employed are calculated to give a composition in which the ratio by weight of the first phosphate ester component to the triphenyl phosphate is within the range 3:1 to 5:1.

7. A process according to any of Claims 1 to 6, in which the phosphorus oxyhalide is phosphorus oxychloride, the alkali metal phenate is sodium phenate, and the alkyl phosphorodihalidate is an alkyl phosphorodichloridate.

8. A liquid phosphate ester composition obtainable by a process according to any of Claims 1 to 7, the said composition having a low temperature storage stability such that no crystallisation of triphenyl phosphate occurs during storage of the composition during 10 days at −5°C.

9. A composition according to Claim 8, in which the first phosphate ester component is a mixture of 2-ethylhexyl diphenyl phosphate and di(2-ethylhexyl) phenyl phosphate containing not more than 10 molar percent of the mixture of di(2-ethylhexyl) phenyl phosphate.

**Revendications**

1. Procédé de préparation d'une composition d'esters phosphates liquides qui est un mélange de (i) un premier composant ester phosphate formé par la réaction d'un réactif oxydihalogéné comprenant au moins un dihalogénophosphate de $C_{6-12}$ alkyle avec un phénate de métal alcalin, ledit premier composant ester phosphate consistant en au moins un phosphate de $C_{6-12}$ alkyle diphényle ou un mélange d'au moins un phosphate de $C_{6-12}$ alkyle diphényle et d'au moins un phosphate de di($C_{6-12}$ alkyle) phényle mélange dans lequel la quantité de phosphate ou de phosphates de di($C_{6-12}$ alkyle) phényle n'est pas supérieure à 10% en mole du mélange, et (ii) du phosphate de triphényle formé par la réaction de l'oxyhalogénure de phosphore avec un phénate de métal alcalin, caractérisé par le fait que l'oxyhalogénure de phosphore est mis à réagir avec un excès stoechiométrique (par rapport à l'oxyhalogénure de phosphore) de phénate de métal alcalin pour former un mélange contenant du phosphate de triphényle et du phénate de métal alcalin, et que le phénate de métal alcalin dans ce mélange est mis à réagir avec le réactif oxydihalogéné, et que les proportions des réactifs utilisés sont calculées pour donner une composition d'esters phosphates liquides dans laquelle le rapport pondéral du premier composant ester phosphate au phosphate triphényle est de 1,8/1 à 5,5/1.

2. Procédé selon la revendication 1, dans lequel une certaine quantité d'oxyhalogénure de phosphore correspondant à la quantité nécessaire de phosphate de triphényle est ajoutée sous agitation et avec refroidissement à une solution aqueuse de phénate de métal alcalin contenant une quantité suffisante de phénate de métal alcalin pour réagir avec la totalité de l'oxyhalogénure de phosphore et avec le réactif oxydihalogéné devant être ajouté par la suite, et quand l'addition de l'oxyhalogénure de phosphore est achevée, le réactif oxydihalogéné est ajouté au mélange réactionnel aqueux sous agitation et avec refroidissement.

3. Procédé selon la revendication 2, dans lequel la quantité initiale de phénate de métal alcalin est de 2 à 10% supérieure à la quantité stoechiométrique par rapport à l'oxyhalogénure de phosphore et au réactif oxydihalogéné ensemble.

4. Procédé selon l'une des revendications 2 et 3, dans lequel la température de réaction pendant la réaction de l'oxyhalogénure de phosphore avec le phénate de métal alcalin et pendant la réaction du réactif oxydihalogéné avec le phénate de métal alcalin est maintenue dans l'intervalle 15—30°C.

5. Procédé selon l'une quelconque des revendications 1 à 4, dans lequel les proportions des réactifs utilisés sont calculées pour donner une composition dans laquelle le rapport pondéral du premier composant ester phosphate au phosphate de triphényle est dans l'intervalle 2/1 à 2,5/1.

6. Procédé selon l'une quelconque des revendications 1 à 4, dans lequel les proportions des réactifs utilisés sont calculées pour donner une composition dans laquelle le rapport pondéral du premier composant ester phosphate au phosphate de triphényle est dans l'intervalle 3/1 à 5/1.

7. Procédé selon l'une quelconque des revendications 1 à 6, dans lequel l'oxyhalogénure de phosphore est l'oxychlorure de phosphore, le phénate de métal alcalin est le phénate de sodium, et le dihalogénophosphate d'alkyle est un dichlorophosphate d'alkyle.

8. Composition d'esters phosphates liquides qu'on peut obtenir par un procédé selon l'une quelconque des revendications 1 à 7, ladite composition ayant une stabilité au stockage à faible température telle, qu'aucune cristallisation du phosphate de triphényle ne se produit pendant un stockage de la composition de 10 jours à −5°C.

9. Composition selon la revendication 8, dans laquelle le premier composant ester phosphate est un mélange de phosphate de 2-éthylhexyle diphényle et de phosphate de di(2-éthylhexyle) phényle ne contenant pas plus de 10% en mole du mélange de phosphate de di(2-éthylhexyle)phényle.

**Patentansprüche**

1. Verfahren zur Herstellung einer flüssigen Phosphatesterzubereitung in Form einer Mischung aus

(i) einem ersten Phosphatesterbestandteil, der durch die Umsetzung eines Dihalidat-Reaktionsteilnehmers, der mindestens ein $C_{6-12}$-Alkylphosphorodihalidat umfaßt, mit einem Alkalimetallphenolat gebildet worden ist, wobei der erste Phosphatesterbestandteil aus mindestens einem $C_{6-12}$-Alkyldiphenylphosphat oder einer Mischung aus mindestens einem $C_{6-12}$-Alkyldiphenylphosphat und mindestens einem Di($C_{6-12}$-alkyl)-phenylphosphat, in welcher Mischung die Menge des bzw. der Di($C_{6-12}$-alkyl)phenylphosphats bzw. phosphate nicht mehr als 10 Mol-% der Mischung ausmacht, besteht, und

(ii) Triphenylphosphat, welches durch die Umsetzung eines Phosphoroxidhalogenids mit einem Alkalimetallphenolat gebildet worden ist, dadurch gekennzeichnet, daß man Phosphoroxidhalogenid mit einem stöchiometrischen Überschuß (bezogen auf das Phosphoroxidhalogenid) eines Alkalimetallphenolats umsetzt, um eine Mischung, die Triphenylphosphat und Alkalimetallphenolat enthält, zu erhalten, und das Alkalimetallphenolat in dieser Mischung mit dem Dihalidat-Reaktionsteilnehmer umsetzt, wobei die Anteile der verwendeten Reaktionsteilnehmer derart berechnet sind, daß sich eine flüssige Phosphatesterzubereitung ergibt, deren Gewichtsverhältnis von erstem Phosphatesterbestandteil zu Triphenylphosphat 1,8:1 bis 5,5:1 beträgt.

2. Verfahren nach Anspruch 1, dadurch gekennzeichnet, daß man eine Menge des Phosphoroxidhalogenids, die der erforderlichen Menge Triphenylphosphat entspricht, unter Rühren und Kühlen zu einer wäßrigen Lösung des Alkalimetallphenolats, die ausreichend Alkalimetallphenolat enthält, um mit der Gesamtmenge des Phosphoroxidhalogenids und dem anschließend zuzusetzenden Dihalidat-Reaktionsteilnehmer zu reagieren, zusetzt und nach vollständiger Zugabe des Phosphoroxidhalogenids den Dihalidat-Reaktionsteilnehmer unter Rühren und Kühlen zu der wäßrigen Reaktionsmischung zugibt.

3. Verfahren nach Anspruch 2, dadurch gekennzeichnet, daß die ursprüngliche Menge des Alkalimetallphenolats 2 bis 10% mehr als die stöchiometrische Menge, bezogen auf die Summe an Phosphoroxidhalogenid und den Dihalidat-Reaktionsteilnehmer, beträgt.

4. Verfahren nach den Ansprüchen 2 oder 3, dadurch gekennzeichnet, daß die Reaktionstemperatur während der Umsetzung des Phosphoroxidhalogenids mit dem Alkalimetallphenolat und während der Umsetzung des Dihalidat-Reaktionsteilnehmers mit dem Alkalimetallphenolat im Bereich von 15 bis 30°C gehalten wird.

5. Verfahren nach einem der Ansprüche 1 bis 4, dadurch gekennzeichnet, daß die Anteile der verwendeten Reaktionsteilnehmer derart berechnet werden, daß eine Zubereitung erhalten wird, deren Gewichtsverhältnis von erstem Phosphatesterbestandteil zu Triphenylphosphat im Bereich von 2:1 bis 2,5:1 liegt.

6. Verfahren nach einem der Ansprüche 1 bis 4, dadurch gekennzeichnet, daß die Anteile der verwendeten Reaktionsteilnehmer derart berechnet werden, daß eine Zubereitung erhalten wird, deren Gewichtsverhältnis von erstem Phosphatesterbestandteil zu Triphenylphosphat im Bereich von 3:1 bis 5:1 liegt.

7. Verfahren nach einem der Ansprüche 1 bis 6, dadurch gekennzeichnet, daß man als Phosphoroxidhalogenid Phosphoroxidchlorid, als Alkalimetallphenolat Natriumphenolat und als Alkylphosphorodihalidat ein Alkylphosphorodichloridat verwendet.

8. Flüssige Phosphatesterzubereitung erhältlich nach einem Verfahren der Ansprüche 1 bis 7 mit einer solchen Tieftemperaturlagerungsstabilität, daß keine Kristallisation des Triphenylphosphats bei der Lagerung der Zubereitung während 10 Tagen bei −5°C erfolgt.

9. Zubereitung nach Anspruch 8, dadurch gekennzeichnet, daß der erste Phosphatesterbestandteil eine Mischung aus 2-Äthylhexyldiphenylphosphat und Di-(2-äthylhexyl)-phenylphosphat ist, die nicht mehr als 10 Mol-% der Di-(2-äthylhexyl)-phenylphosphatmischung enthält.